# EUROPEAN PATENT SPECIFICATION

(11) **EP 1 208 696 B1**
(45) Date of publication and mention of the grant of the patent: **25.01.2006**
(21) Application number: 00949815.5
(22) Date of filing: 09.08.2000
(51) Int. Cl.: H04N 5/00

(54) **BROADCAST PROGRAM RECORDING APPARATUS USING ELECTRONIC PROGRAM GUIDE**
EINE ELEKTRONISCHE PROGRAMMÜBERSICHT BENUTZENDE FERNSEHPROGRAMMAUFNAHMEANLAGE
Appareil d'enregistrement de programme de télévision, utilisant un guide de programmation électronique

(30) Priority: 09.08.1999 GB 9918772; 20.01.2000 GB 0001326
(43) Date of publication of application: 29.05.2002
(60) Divisional application: 04019015.9
(73) Proprietor: British Sky Broadcasting Limited, Middlesex TW7 5QD (GB)
(72) Inventor: BODKIN, Nigel, Isleworth, Middlesex TW7 5QD (GB); WILLAME, Xavier, Isleworth, Middlesex TW7 5QD (GB); CROSSLEY, Robin, Isleworth, Middlesex TW7 5QD (GB); JAMES, Nick, Isleworth, Middlesex TW7 5QD (GB)
(74) Representative: Cross, James Peter Archibald
(86) International application number: PCT/GB2000/003065
(87) International publication number: WO 2001/011865

(56) References cited:
- EP-A2- 0 765 079
- EP-A2- 0 784 401
- EP-A2- 0 785 675
- EP-A2- 0 940 985
- WO-A1-00/16548
- WO-A1-98/26584
- WO-A1-99/66719
- WO-A2-99/22513
- US-A- 5 371 551
- US-A- 5 659 653
- US-A- 5 696 866
- US-A- 5 774 170
- US-A- 5 774 186
- US-A- 5 852 474
- US-A- 5 880 768
- PATENT ABSTRACTS OF JAPAN vol. 1998, no. 14, 31 December 1998 (1998-12-31) & JP 10 243307 A (AIWA CO LTD), 11 September 1998 (1998-09-11)

## Description

The invention relates to improvements in receivers for television signals.

### Background of the Invention

A Hard Disk Recorder (HDR) is known which comprises a television receiver and a hard disk for recording received television programmes. The HDR is arranged to be connected to the telephone network in order to receive through the telephone network television programme schedule information for display on a television screen. A telephone link must be established with the provider of the programme schedule data every time the programme schedule data is to be updated. Such updating may be performed at regular intervals, say once a day. The programme schedule data may be used by a user to program the HDR in order to record a desired television programme. WO 98/26584 describes a similar system in which programme schedule data is provided over the Internet.

The requirement to establish a link with the HDR via a telephone network such as the Internet is undesirable. This is because the HDR may not always be "on line" for reasons such as costs, or because the telephone connection is to be used otherwise. Accordingly, the available programme schedule data may be out of date. If a user relies on the programme schedule information when programming his HDR to record a desired programme, he may unknowingly rely on out-of-date programme schedule data, which in turn may result in the desired programme not being recorded.

Also, due to the ever increasing variety of television channels and programmes, it is getting more likely that there will be a clash in the programme schedule of television programmes which the user would wish to record. Currently known video cassette recorders (VCRs) and HDRs fail to address this problem.

EP-A-0940985, which forms part of the state of the art under Article 54(3) EPC, describes a digital multimedia recorder that can record television programmes in accordance with Event Information Tables transmitted in the television channels.

US-A-5,580,768 presents an interactive program guide system implemented in a set-top box used for recording on an external recorder.

WO 00/16548 which forms part of the state of the art under Article 54(3) EPC, describes a programme guide indicating recorded programmes that have been viewed.

### Summary of the Invention

According to the present invention, there is provided a receiver for receiving television signals, representative of television programmes, in a plurality of channels, the receiver including a recorder for recording the television programmes; the television signals also including programme schedule data which defines events in terms of channels, programmes and broadcast times, and the receiver including: a decoder for separating the signals representative of the television programmes from the programme schedule data; means for producing output signals for displaying on a television screen events in the programme schedule in accordance with the programme scheduling data; and a user operable selector operable to select displayed events, the recorder being responsive to such user selection to record television programmes corresponding to the selected events, wherein the output signals are for displaying recorded events and include playback information indicating whether a recorded event has been partly played back from the recorder.

### Brief Description of the Drawings

An embodiment of the invention will now be described, by way of example only, with reference to the accompanying drawings, in which:
Figure 1 is a schematic diagram of a television receiver system;
Figure 2 is a functional block diagram of a Hard Disk Recorder (HDR);
Figure 3 is a functional diagram showing interaction between hardware and software of the HDR of Figure 2;
Figure 4 is a schematic illustration of a remote control which may be used to control the HDR;
Figure 5 is a functional block diagram of a hard disk arrangement;
Figure 6 is a schematic representation of a "services" screen;
Figure 7 is a schematic representation of a "TV guide" screen;
Figure 8 is a schematic representation of a "planner" screen;
Figure 9 is a schematic representation of a "system setup" screen; and
Figure 10 is a schematic representation of an "advertisements" screen.

### Detailed Description of an Embodiment of the Invention

### 1. System Overview

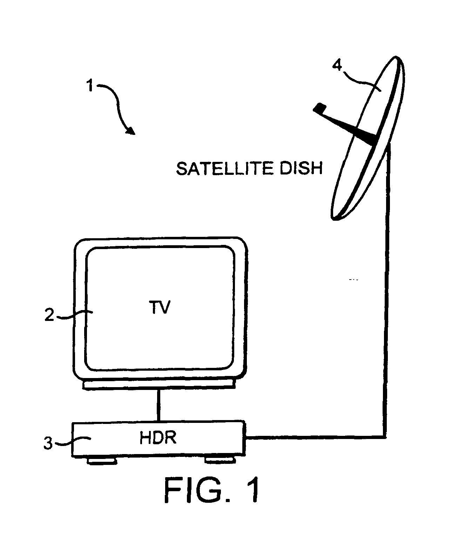

Referring now to Figure 1 of the accompanying drawings, a television system 1 comprises a television 2 (TV), a hard disk recorder 3 (HDR), and a satellite dish 4. The HDR 3 comprises a satellite receiver which is connected to the satellite dish 4 for reception of signals from a satellite (not shown). The HDR receives signals from the satellite dish 4, including television signals, in a plurality of channels.

### 2. Hard Disk Recorder (HDR) - Overview

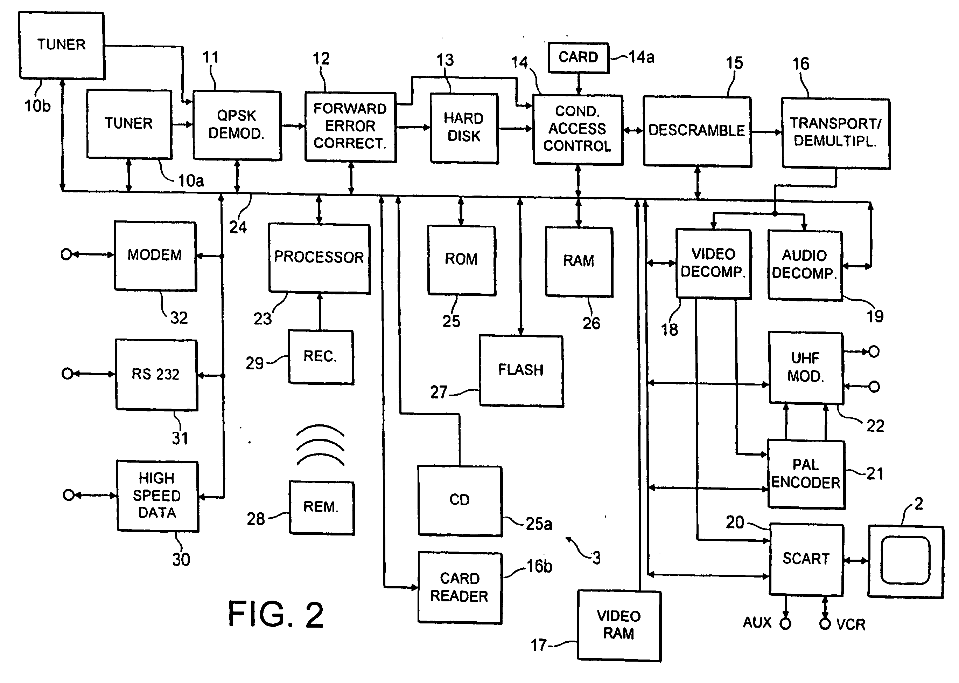

Figure 2 of the accompanying drawings shows the HDR 3 in greater detail. Signals from the dish antenna 4 (shown in Figure 1) are input to first and second tuners 10a and 10b and from there to a quadrature phase shift key (QPSK) demodulator 11. The first and second tuners 10a and 10b are tunable into the same or different channels for simultaneous reception of the same or different television programmes. Demodulated signals are error-corrected by way of a forward error corrector circuit 12. The HDR 3 comprises a hard disk 13 which receives from the forward error corrector circuit 12 compressed video and audio data forming television programmes for recording and subsequent playback thereof, as will be described in greater detail hereinbelow. The received signals comprise digitally encoded data. It is envisaged that the data will be compressed using for example the DVB/MPEG 2 standards which permit both programme data and additional data (for example interactive service data) to be transmitted in a single channel. DVB/MPEG 2 enables high compression ratios to be achieved. The hard disk 13 receives and stores compressed data. The data is decompressed only after retrieval from the hard disk 13.

Satellite (and indeed cable) programmes are usually scrambled to prevent unauthorised access by non-authorised subscribers. The HDR 3 therefore comprises a conditional access control circuit 14 which co-operates with a smart card 14a to determine whether the viewer has subscribed to a particular channel and is therefore authorised to access the channel. Parental control over channel access is also provided, at least in part, by the access control circuit 14. The HDR 3 further comprises a descrambling circuit 15 which is controlled by the access control circuit 14 to enable the descrambling of the signal by authorised subscribers.

Descrambled data is supplied to a transport/demultiplexer 16 which separates the data into video data, audio data, user services data, programme scheduling data, etc. for distribution to various locations within the HDR 3. The HDR 3 also comprises a video decompression and processing circuit 18 utilizing a dedicated video RAM 17. and an audio decompression and processing circuit 19, operating according to the MPEG standard, for example. The video and audio decompression and processing circuits 18 and 19 receive demultiplexed signals directly from the transport/demultiplexer 16, or from the hard disk 13. Decompressed video signals are input to a SCART interface 20 for direct input to the TV 2 and to a PAL encoder 21 where they are encoded into the PAL format for modulation by a UHF modulator 22 for output to the UHF input of the TV if so desired.

The HDR 3 is controlled by a processor 23 which communicates with the various units of the system via a bus 24. The processor 23 has associated with it ROM 25 (optionally including a CD-ROM drive 25a), RAM 26 (comprising both dynamic RAM and static RAM) and a flash (non-volatile and writable) memory 27.

The processor 23 controls operation of the HDR 3 by tuning the tuners 10a and 10b to receive signals for the desired channels from the dish antenna 4 by controlling the demultiplexing, descrambling and decompression so that the desired programme and/or interactive service data is displayed on the screen of the TV 2, and by controlling the hard disk 13 to record desired television programmes or to play back previously recorded television programmes. Viewer selection of desired programmes and customer services is controlled by way of a remote control unit 28 which in response to viewer manipulation thereof transmits control signals to a receiver 29 for input to the processor. The remote control unit 28 also allows for the control of the operation of the hard disk 13 to record television programmes, to play back recorded television programmes, to program the recording of television programmes, etc. The remote control unit 28 will be described in greater detail hereinafter.

The HDR 3 further comprises a high-speed data interface 30 and an RS232 interface 31 providing a serial link. The high-speed data interface 30 and the RS 232 interface may be connected to a PC and/or a games console 8 and/or other digital equipment (not shown). The high speed data interface 30 enables the HDR 3 to be connected to other devices (not shown) for example to enable reception of services transmitted via other media such as broadband cable and digital terrestrial broadcast. The HDR 3 further comprises a modem interface 32 for connecting a telephone network.

### 3. Interaction between Hardware and Software of the HDR

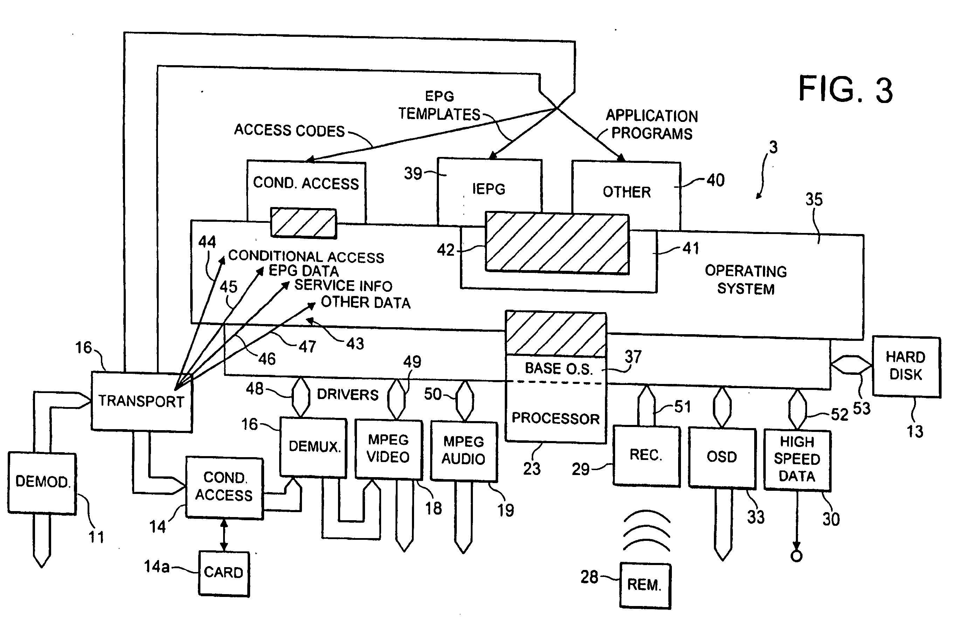

Operation of the HDR 3 is controlled by software that makes the processor 23 responsive to control signals from the remote control unit 28 and to data included in the signal received by the dish antenna 4 and/or stored in the memory units 25 to 27. A schematic representation of the interaction between hardware and software in the HDR 3 is shown in Figure 3 of the accompanying drawings. The data in an incoming signal is separated by the transport/demultiplexer 16 into video data and information data. The information data is distributed around the hardware and software, as will be described in greater detail hereinafter. The video data and the audio data is demultiplexed and output in suitable form for supply to the TV 2 or to the hard disk 13 by the MPEG video and audio circuits 18 and 19. When information is to be displayed either with or instead of the video data, data representing the information is output in suitable form for supply to the TV via an on-screen display (OSD) driver 33 and the video circuit 18. Signals from the OSD driver 33 and the video circuit 18 are combined as appropriate before being supplied to the TV 2.

Operation of the software and hardware of the HDR 3 is based around an operating system 35. The conditional access controller 14 has associated software 36 which interfaces with the operating system. The processor 23 has its own base operating system 37 which interfaces to the HDR operating system 35. Applications such as an intelligent electronic programme guide (IEPG) 39 and other applications 40 including interactive services interface to the operating system 35 via an applications interface 41 and associated application interpreter 42.

The software for conditional access applications such as the IEPG 39 are installed permanently within non-volatile memory, e.g. the ROM 25, of the HDR 3, but variable information such as new access codes and TV programme scheduling details is stored in the RAM 26 and updated regularly via signals received from the dish antenna 4. Demodulated signals from the demodulator 11 are input to the transport/demultiplexer 16 which examines the data to decide where it should be sent. From time to time significant changes may be made to conditional access codes or to the manner in which the IEPG 39 displays programme information. Also, programmes for additional applications, say an interactive shopping or banking service for example, are also supplied via the satellite for the HDR 3. Such application data is routed by the transporter/demultiplexer 16 directly to the appropriate areas 40 of the memory 26, 27.

Operating data 43 is supplied on a substantially continuous basis in every channel. The operating data 43 includes conditional access data 44 associated with a channel and/or programmes therein which enables the conditional access controller 14 to determine whether or not access should be allowed to a particular programme by descrambling the data therefor. Additionally, operating data relating to interactive services is transmitted in dedicated interactive service channels which carry control and information data for use by the hardware and software of the processor 23 and the associated memory devices 25 to 27. Thus, the operating data 43 depicted in Figure 3 also includes interactive service programs and information 46 (for example relating to personal banking services) and indeed any other data 47 required on a substantially continuous or regular basis for the aforementioned interactive services.

The transport/demultiplexer 16 is arranged to supply the operating data 43 to the processor 23. The data is acted upon by the operating system 35, the conditional access and/or other operating software. The processor 23 responds to the data by sending appropriate commands or signals to other units within the system. Control data is also transferred between the processor 23 and such units as the transporter/demultiplexer 16. the hard disk 13, the video and audio decompressors 18, 19. the remote control receiver 29 and the high-speed data interface 30 via respective drivers 48 to 53.

The combined hardware and software of the HDR 3 enables the data in received channels to be decoded for display or recording of viewer selected programmes. The scrambling is controlled on a continuous basis and the HDR can be updated with new descrambling codes as and when required. Data for interactive services is supplied and updated substantially continuously and programmes relating to newly selected interactive services are downloaded into the HDR 3.

Operation of the HDR 3 in receiving and decoding data representing television programmes and data defining scheduling and other information related to the programmes is described in detail in our International (PCT) patent application published as WO 96/37996, aforementioned. Operation of the HDR 3 in providing interactive services is described in our International (PCT) application published as WO 97/23997, aforementioned.

Within the Digital Video Broadcasting (DVB) standards for digital TV transmission there exists a standard for the transmission of schedule information such that it can be decoded and presented correctly to subscribers in the form of an Electronic Programme Guide (EPG).

This DVB standard is known generally as the SI standard and can be found in the specification: ETS 300 468, ETSI Digital Broadcasting Systems for Television. Sound and Data Services: Specification for Service Information (SI) in Digital Video Broadcasting (DVB) Systems 2nd edition. Guidelines for using the specification are given in ETSI ETR 211- DVB SI Guidelines.

In order to allow broadcasters to utilise any proprietary features of their EPGs the SI standard includes methodology for extending the format of the service information (SI) stream by the inclusion of private data tables and descriptors. The HDR 3 is, of course, designed to support the mandatory parts of the SI specification.

### 4. Remote Control

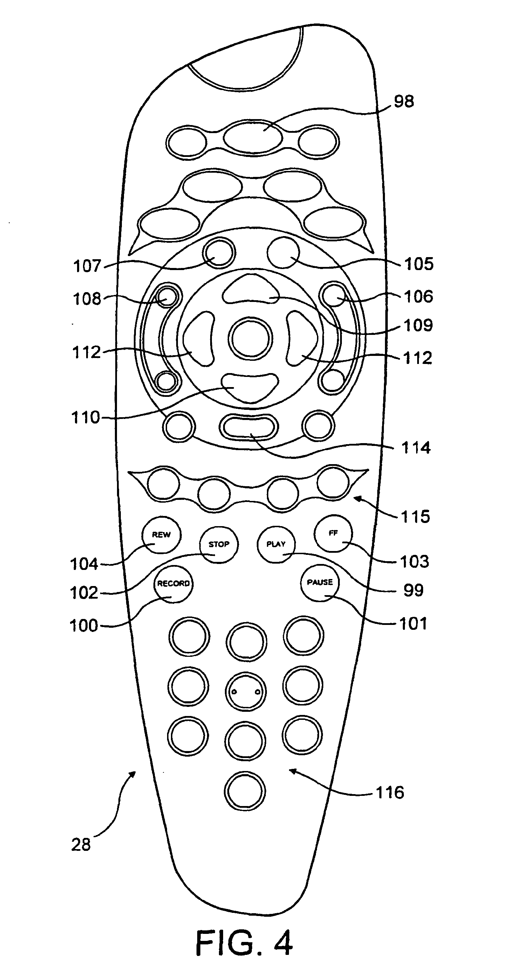

Figure 4 illustrates the remote control 28 for the control of the HDR 3. A manipulation of the keys on the remote control 28 causes the remote control 28 to transmit to the HDR 3 corresponding command signals.

The remote control comprises an on/off key 98, a manipulation of which causes the HDR 3 to be switched on or off. Also, the remote control 28 comprises a playback key 99, a record key 100, a pause key 101, a stop key 102, a fast forward key 103, and a fast rewind key 104. Manipulation of the playback key 99 causes the HDR 3 to playback a recorded television programme from the hard disk 13. Manipulation of the record key 100 causes a television programme to be recorded on the hard disk 13. A manipulation of the pause key 101 causes the HDR 3 to halt a currently played back television programme, as described above, while a manipulation of the stop key 102 causes the playback to be stopped. The fast forward key 103 and the fast rewind key 104 allow a user to operate the HDR 3 in fast forward or fast rewind modes, as will be described in detail hereinafter.

In addition, the remote control 28 comprises a menu key 105, a TV guide key 106, a services key 107. and an interactive services key 108. A manipulation of one of these keys 105 to 108 causes the HDR 3 to display a corresponding menu screen, as discussed above. Furthermore, the remote control 28 comprises an "up" key 109, a "down" key 110, a "right" key 111, and a "left'' key 112. Manipulation of these keys allows a user to select displayed menu items. An operation associated with a selected menu item is executed by manipulation of an execute key 113. Alternatively, a selected menu item is marked as selected by manipulation of a select key 114. Similarly, the remote control 28 comprises colour keys 115 of different colours. Manipulation of one of the colour keys 115 allows a user to select a menu item which is indicated on a displayed menu screen to be associated with the colour of the manipulated colour key, as will be described in detail hereinbelow.

Also, the remote control 28 comprises number keys 116 whose manipulation causes the HDR 3 to tune to a channel corresponding to the number entered through the number keys 116.

### 5. The Hard Disk

Since the first and second tuners 10a and 10b can be tuned to receive different channels, it is possible for a first television programme in one channel to be displayed on the TV 2, while at the same time a second television programme in another channel is recorded on the hard disk 13. Furthermore, as will be explained below, two different television programmes may be recorded simultaneously on the hard disk 13.

The hard disk 13 of the HDR 3 is similar to hard disks used in computer systems for storing large amounts of data. The hard disk 13 has a capacity of several gigabytes (e.g. 10-20 gigabytes) and receives video and audio data for storage in the compressed form in which it is received, for example, in accordance with the DVB/MPEG 2 standards as discussed above. This allows for the storage of several hours of television programmes (e.g. 10-15 hours) on the hard disk 13. The hard disk 13 comprises two storage areas, one for the storage of television programme data, and the other for storing "metadata" which is used to control the hard disk 13, as will be discussed in greater detail hereinbelow. The operation of the hard disk 13 is controlled by the processor 23. The processor 23 sends control commands to the hard disk 13, to start/stop the recording of a television programme, to play back a recorded television programme, etc.

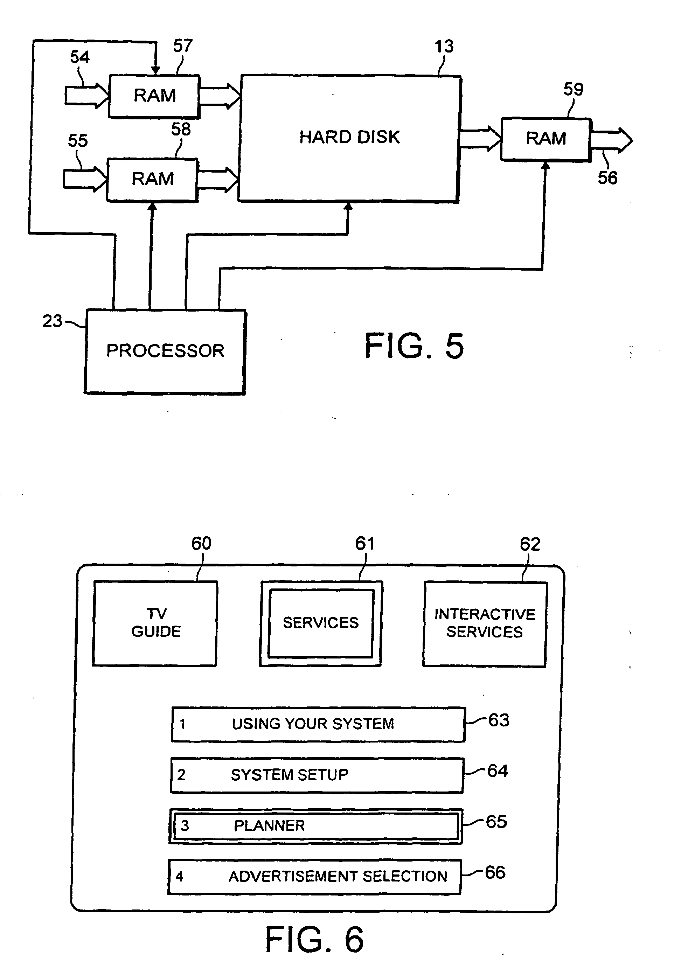

Referring now to Figure 5 of the accompanying drawings, a schematic block diagram of the arrangement of the hard disk 13 is shown. The hard disk 13 has three data channels through two of which data is received for storage on the hard disk 13 and through one of which it is output for subsequent displaying of television pictures. The three data channels consist of two data input channels 54 and 55 and one data output channel 56. Each of the data channels has associated with it a data buffer 57, 58 and 59, respectively. Each of the data buffers 57, 58 and 59 comprises a RAM of sufficient size to store several seconds of data (e.g. 8 megabytes). The operation of the data buffers 57, 58 and 59 as well as that of the hard disk 13 are controlled by the processor 23.

The hard disk 13 is operable to manage simultaneous reception of data through the data channels 54 and 55 and output of data through the data channel 56. Data received through the data channels 54 and 55 is not stored directly on the hard disk 13 as it is received but is buffered by the buffers 57 and 58, respectively. Likewise, data to be output through the data channel 56 is not output directly as it is read from the hard disk 13 but is buffered in the buffer 59.

The hard disk 13 is capable of managing a data rate which is higher than the rate at which data can be transferred through at least two of the three channels 54, 55 and 56. That is, the hard disk 13 is capable of managing a data rate at least as high as the rate of data transmitted through all three channels 54, 55 and 56 combined. Thereby, the hard disk 13 is capable of simultaneously storing data received through both the input channels 54 and 55 and outputting data through the output channel 56.

This is achieved by buffering the received data and the data to be output in the buffers 57, 58 and 59, and by switching between them in order to transfer data from the input buffers 57 and 58 to the hard disk 13, or to transfer data from the hard disk 13 to the buffer 59. Although hard disks comprising separate heads for writing and reading are available, in the interest of cost the hard disk 13 comprises one single head for both writing onto and reading from the hard disk 13. Therefore, while the hard disk 13 at any point in time stores/reads data associated with only one of the three data channels 54, 55 and 56, it sequentially stores/reads data associated with the three channels 54, 55 and 56, thereby "virtually" dealing with the three data channels simultaneously.

The switching is controlled by the processor 23 by arbitrating between any three of the buffers 57, 58 and 59 at a frequency which is in accordance with their buffer size so as to prevent a data overflow and thereby data loss. For example, if the buffers 57, 58 and 59 are capable of storing 30 seconds of received data each, and the HDR 3 is operated to record two simultaneous television programmes received through the channels 54 and 55, then the hard disk 13 is operated to receive alternately data from the buffers 57 and 58 at an alternation cycle of 30 seconds or less, transferring the buffer content to the hard disk 13 each time the processor switches from one of the buffers 57, 58 to the other. Accordingly, it is possible to record simultaneous/overlapping television programmes received by the first and second tuners 10a, 10b in different channels.

The buffering of incoming as well as outgoing data by the data buffers 57, 58 and 59 means that the hard disk 13 does not need to be synchronised to a particular input or output data rate. Instead, the hard disk 13 always reads and stores data at the same constant data rate. The amount of data stored on or read from the hard disk 13 is determined by the duration for which the hard disk 13 is switched through for data transfer to the respective one of the data buffers 57, 58 or 59. During such time data is transferred from or to the respective data buffer at the constant data rate. While the reception data rate through the channels 54 and 55 or the output data rate through the channel 56 may vary (for example depending on the bandwidth of received television signals, or depending on the playback mode), the rate of data transferred between any of the buffers 57, 58 and 59 and the hard disk 13 is constant and determined by the data rate the hard disk 13 is capable to manage.

The hard disk 13 is controlled by the processor 23 to operate in different playback modes, including forward and backward modes, in which a recorded programme can played back at the normal frame rate or at a reduced frame rate (i.e. slow motion). The hard disk 13 is also operable in a fast forward and a fast rewind mode, in which a recorded television programme can be played back at an increased frame rate. The viewer may select any of these modes by giving appropriate commands via the remote control 28.

### 5.1 Skipping Undesired Programme Parts

In a skip mode, the processor responds to signals from the remote control 28 by controlling the hard disk 13 to skip forwards and backwards through recorded programmes, to skip back to the beginning of a recorded programme, or to skip forward to the next recorded programme. For this purpose, the beginning of a recorded television programme on the hard disk 13 is marked by storing metadata in the form of an indicator pointing at and thereby marking the beginning of the programme.

The indicator data along with other metadata data used for controlling the hard disk 13 is stored in a metadata area of the hard disk 13. The indicator data is based on the standard time codes which is transmitted with television programme signals.

During playback the viewer may wish to pause a programme part way through while he goes and does something else. When the viewer operates the remote control 28 to give a command to pause the playback, the processor 23 generates an indicator signal and causes the hard disk 13 to store corresponding indicator data in the form of a time code in the metadata area on the hard disk 13. When the viewer wishes to resume the viewing of the programme, an appropriate command via the remote control 28 causes the processor 23 to control the hard disk 13 to read the stored time code and to skip to the corresponding hard disk position to resume playback of the programme from that position. In other words, the HDR 3 "remembers" when the viewing of a recorded television programme was interrupted and resumes the playback of the remaining television programme accordingly.

Programmes may be broadcast which include "skip" signals indicating the start and/or the end of parts of the programmes (for example parts of programmes separated by advertising breaks). These skip signals are time code-based and are transmitted in each channel together with the television signals. When the HDR records a television programme that includes skip signals in the television signals, the HDR 3 causes the hard disk 13 to store skip codes representative of the skip signals as a list of successive skip codes in the metadata area on the hard disk 13. During playback of such a television programme a "skip" mode may be selected (by user manipulation of the remote control) in which the processor 23 responds to the stored skip codes to control how programme signals are read from the hard disk 13. Thus, for example, the skip codes might identify time codes for the start and end of advertising breaks in a programme and the processor 23 may be arranged to respond to the skip codes by controlling the hard disk 13 to output television signals for the programme until the frame corresponding to the start time code is reached and then to continue outputting signals from the frame corresponding to the end time code. In this way advertising breaks may be skipped during playback of a recorded programme.

### 5.2 Halting a Television Programme and Catching-Up Again

The HDR 3 is operable to display a television programme which is currently being received through one of the tuners 10a, 10b in two different playback modes. In the first display mode, the television programme is displayed "directly" without being recorded on the hard disk 13. In the second playback mode, the currently received television programme is recorded on the hard disk 13 and the recorded television programme is played back from the hard disk 13. The resulting time shift between the played back television programme and the television programme as it is recorded is marginal and is not perceptible by a viewer.

Starting from either of these playback modes, the hard disk 13 is operable to simulate the halting of a currently displayed television programme and to resume playback of the programme any time after the moment at which it was halted. If the user wishes to halt the current television programme while the HDR 3 is in the first playback mode, he may do so, for example, by manipulating the pause button on the remote control 28. The processor 23 is arranged to respond to a "pause" signal from the remote control 28 by controlling the hard disk 13 to start recording the current television programme. In the second playback mode, the hard disk 13 simply carries on recording.

When "pause" is selected, the processor 23 "freezes" the current television picture frame by causing the same frame to be repeatedly output to the TV 2. When the user wishes to resume watching the television programme, he may do so by again manipulating the pause button on the remote control 28. The processor 23 responds to this second pause signal by causing the hard disk 13 to output the recorded data for the halted television programme from the moment at which the user first manipulated the pause button.

The hard disk 13 continues recording the television programme as it is received by one of the tuners 10a or 10b. In other words, the hard disk 13 can simultaneously record a concurrently received television programme and play back the television programme offset in time by the period for which the television programme was halted. (The manner in which the hard disk records and plays back simultaneously is described above in connection with Figure 5.)

The strong emotional pull of a broadcast live event, for example a live sports event, makes it desirable to be able to catch up with the actual live broadcast after it has been halted. One possibility of catching up is, of course, to switch from playing back the recorded programme shifted in time to displaying the programme as it is received by one of the tuners 10a or 10b (and simultaneously recorded by the hard disk 13 in the second playback mode), thereby ignoring the period during which the displaying of the television programme was halted.

Another possibility is to catch up by skipping advertising breaks or any other parts of the television programme in which the viewer is not interested. As discussed above, the HDR 3 is arranged to receive broadcast signals that indicate the start and/or end of advertising breaks or predetermined parts of the television programme (such as the half-time break of a football match), and to store corresponding data pointing at the start and/or the end of such programme parts on the hard disk 13 together with the data representing the television programme. On receipt of an appropriate command from the remote control 28, the processor 23 reads this data from the hard disk 13, and in response thereto jumps to the next point of the recorded television programme, for example to the end of an advertisement break. If there is more than one advertisement break inside the period in which the live broadcast was halted, then this operation can be repeated by the user by giving the same command during any advertisement break or any other undesired part of the television programme that can be skipped in this manner.

The HDR 3 is also able to catch-up dynamically. To this end during playback the recorded television programme is played back at an increased speed relative to the "live" speed. For example, if a broadcast was halted for one minute, and the television programme recorded during that one minute was replayed from the hard disk 13 at 125% of its normal (live) speed, then the time offset caused by the halt would be overcome in four minutes. The playback speed is increased by retrieving data from the hard disk 13 at an increased rate and by "dropping" frames of the television picture to be displayed during playback. The rate of data retrieval is increased by transferring more data from the hard disk 13 to the data buffer 59 (see Figure 5), e.g. by switching the hard disk 13 to the buffer 59 more frequently and/or for longer periods of time (see the discussion of Figure 5 hereinabove). The catching-up rate, i.e. the playback speed can be selected by the viewer via the remote control 28. This dynamic catching-up can be combined with the above described skipping of advertisement breaks or other undesired parts of television programmes, thus allowing the viewer to catch-up even more quickly.

When the catching-up is finished, in the first playback mode, the HDR 3 switches from outputting television signals from the hard disk 13 to outputting television signals as received by one of the tuners 10a or 10b. In the second playback mode, the HDR 3 operates the hard disk 13 to switch to normal playback speed.

### 5.3 Substituting Broadcast Advertisements

The HDR 3 also is operable to play back pre-recorded advertisements from the hard disk 13 instead of advertisements received from the broadcaster. This feature is of interest when the HDR 3 is to be used in public premises, for example in pubs or sports bars during the transmission of sports events. In this latter example, it may be desirable to show, say, beer advertisements which may tempt the addressed customer immediately to purchase a specific brand of beer.

The HDR 3 is arranged to receive signals transmitted by the broadcaster indicating the start and the end of advertisement breaks. On receipt of a signal by the HDR 3 indicating the start of an advertisement break, the processor 23 causes the hard disk 13 to replay a pre-recorded advertisement sequence which is displayed on the TV 2 instead of the television programme as received by one of the tuners 10a or 10b. Once the HDR 3 receives another signal indicating the end of the advertisement break, the processor 23 causes the hard disk 13 to terminate the playback of the pre-recorded advertisement sequence, such that the television programme as received by one of the tuners 10a or 10b is displayed again on the TV 2.

Furthermore, the HDR 3 is arranged to use the signals indicating the start and the end of advertisement breaks not to record advertisement breaks during the recording of a selected television programme. In this case, during the recording of a programme, the processor 23 controls the hard disk 13 to halt the recording on receipt of a signal indicating the start of an advertisement break. Subsequently, on receipt of a signal indicating the end of an advertisement break, the processor 23 controls the hard disk 13 to resume the recording.

Instead of using one signal each for indicating the start and the end of an advertisement break, the HDR 3 may be arranged to process to the same effect signals indicating the start and the duration of an advertisement break. In this alternative embodiment, the processor 23 switches back to the television programme as received, or operates the hard disk 13 to resume the recording, at the end of the indicated duration of the advertisement break. Accordingly, no separate signals to indicate the end of advertisement breaks are required.

### 5.4 Programme Scheduling Information

The data in each channel is in compressed form, for example in accordance with the DVB/MPEG-2 standard as discussed hereinabove. DVB allows both video data and other data to be combined in a single channel. In addition to the aforementioned operating data 43 (see Figure 3) for use in controlling access to channels, the data in a channel can include brief programme scheduling data representative of so-called event information tables (EITs) defining the scheduling of programmes in each channel as scheduling events. The programme schedule data is used by the HDR 3 to control the operation of the hard disk 13. When the HDR 3 is pre-programmed to record a selected television programme, the HDR 3 operates the hard disk 13 to start and to stop the recording in accordance with the scheduling data which comprises the start and the end time of the selected television programme. Since the scheduling data is updated regularly, the recording is started and stopped in accordance with the updated programme schedule, thus guaranteeing that a selected programme is actually recorded even in case of a change of programme schedule, because such change is reflected in the programme schedule data in each channel.

The scheduling data may be stored in the RAM 26 and, once stored, the scheduling information is available effectively instantaneously for controlling the operation of the hard disk 13. As discussed above, the scheduling data is transmitted regularly (say every 30 seconds) so that the HDR 3 will be updated substantially continuously. The information is brief to enable each channel to carry the scheduling data without excessive overheads in terms of bandwidth requirements in each channel and memory requirements in the HDR.

In addition, it is envisaged that a dedicated IEPG channel will transmit more detailed programme scheduling information. The information transmitted via this dedicated channel is updated more frequently (say every 3 seconds) and cover a longer period of time (e.g. one week). As a consequence, an up-to-date television programme schedule of a complete week will always be available. As will be explained in greater detail below, the HDR 3 is arranged to display the programme scheduling information on the TV 2. Also, a viewer can interact with the HDR 3 to program recordings of television programmes, view a desired part of the available programme schedule, etc., on the basis of the information received via the dedicated IEPG channel.

Accordingly, while the programme scheduling data in each channel is used by the HDR 3 to operate the hard disk 13 to record a pre-programmed television programme in a selected channel at the correct up-to-date time, the programme scheduling data in the dedicated IEPG channel is used to display the programme schedule for several of the channels over a predetermined period of time (which in turn is used for programming the HDR 3 as will be described hereinbelow).

### 6. Operation of the HDR

The programme schedule information represented by the digital signals in the IEPG channel received via the satellite dish 4 can be displayed under viewer control via the remote control 28 on the TV 2. Selection of the menu key 105 causes the HDR 3 to output for display a main menu screen. (Similarly, selecting the TV guide key 106. the services key 107 or the interactive service key 108 will cause the HDR 3 to select an appropriate control menu screen for display to enable viewer interaction in respect of those services as described in our aforementioned international application WO97/23997).

A schematic representation of the services menu screen is shown in Figure 6. On top of the screen, menu items 60, 61 and 62 represent the available control menus, of which item 61 - corresponding to the currently displayed control menu - is highlighted. One of the other two control menus can be selected and displayed by pressing the TV guide key 106 or the interactive service key 108 on the remote control 28, or by pressing the "left" or the "right" key 111/117, selection of which causes menu item 60 or 62 to be highlighted, respectively.

Similarly, menu items 63, 64, 65 and 66 of the services control menu can be selected by using the "down" or the "up" key 109/110 on the remote control 28, causing the currently selected menu item 65 to be highlighted, followed by pressing the "execute" key 113.

### 6.1 Display of TV Programme Schedule

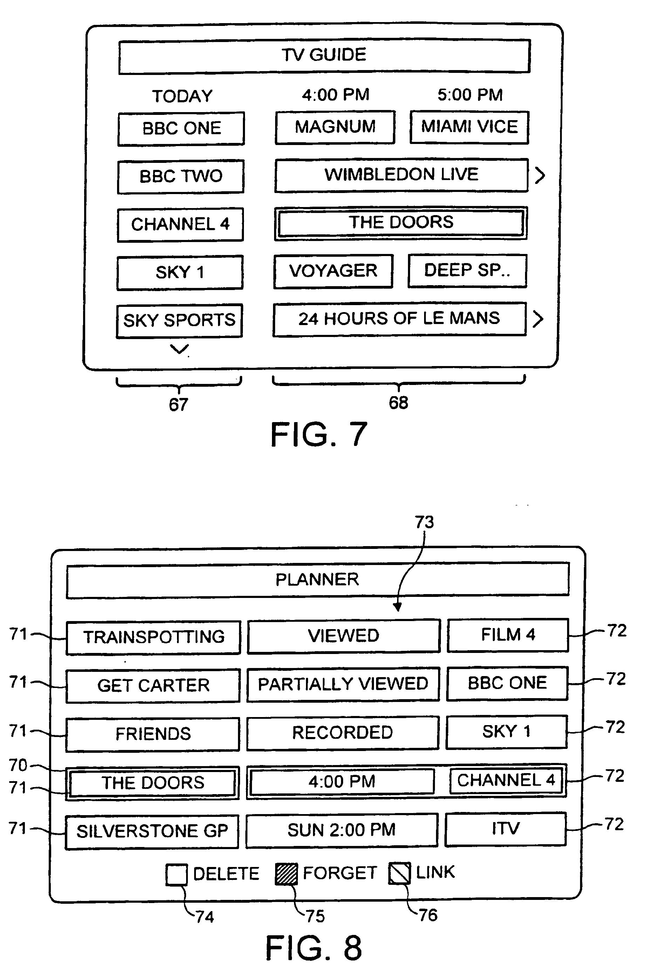

Figure 7 shows in simplified form a TV programme schedule screen which is displayed on the TV screen after selection of the "TV guide" item 60 in Figure 5. Signals representing the TV programme schedule are received by the HDR 3 via the satellite dish 4 in a dedicated IEPG channel, as described above. The left-hand side column 67 in Figure 7 lists the available channels, while the right-hand side column 68 lists the television programmes for each channel in chronological order. If not all available channels can be displayed on the screen, the viewer can cause the HDR 3 to display them by operating the "up" or "down" key 109/110 on the remote control 28, thereby causing the HDR 3 to make the screen to scroll up or down, respectively. Also, if the viewer wishes to move backward or forward in time to display earlier or subsequent television programmes, he can do so by operating the "left" or the "right" key 111/112 on the remote control 28, respectively.

Likewise, the viewer may select one of the displayed television programmes by using the "up", "down", "left" and "right" keys 109-112 on the remote control. The currently selected programme "The Doors" is highlighted. If the viewer wished to select "Voyager" instead, he would have to operate the "down" key 110. If he wished to select "Deep Space Nine", he would have to operate the "down" key 110 followed by the "right" key 111.

### 6.2 Planner

If a selection of a programme is followed by an operation of the "record" key 100, then data representative of the selected programme is stored in the RAM 26. The selection of a programme and the resulting storage of data representative of the selected programme causes the HDR 3 to record on the hard disk 13 the selected programme at the time when it is scheduled to be broadcast. As discussed above, the hard disk 13 is operated to record the selected programme in accordance with the programme schedule data in the selected channel.

The data stored in the RAM 26 in response to a programme selection represents information concerning the title of the selected programme, its start and end times, as well as status information as to whether a selected programme is still to be recorded, whether it has been recorded or part-recorded and is still to be viewed, or whether a recorded programme has been partially viewed. All this information is displayable on the TV screen by sending an appropriate command to the HDR 3 via the remote control 28 which causes the HDR 3 to retrieve the corresponding data from the RAM 26 to display the information it represents. The displayed information will be referred to hereinafter as the "planner" because it allows a user to plan his personal television schedule by making appropriate selections.

The planner information is stored on the hard disk 13 in form of data representing a list of successive programmes over time. The processor 23 operates the hard disk 13 to record a television programme at the time stored in association with the first television programme to be recorded in this list. In response thereto, the status information associated with this programme is updated to indicate that the programme has been recorded. The processor operates the hard disk 13 again at the time associated with the next programme in the list to be recorded, and so on.

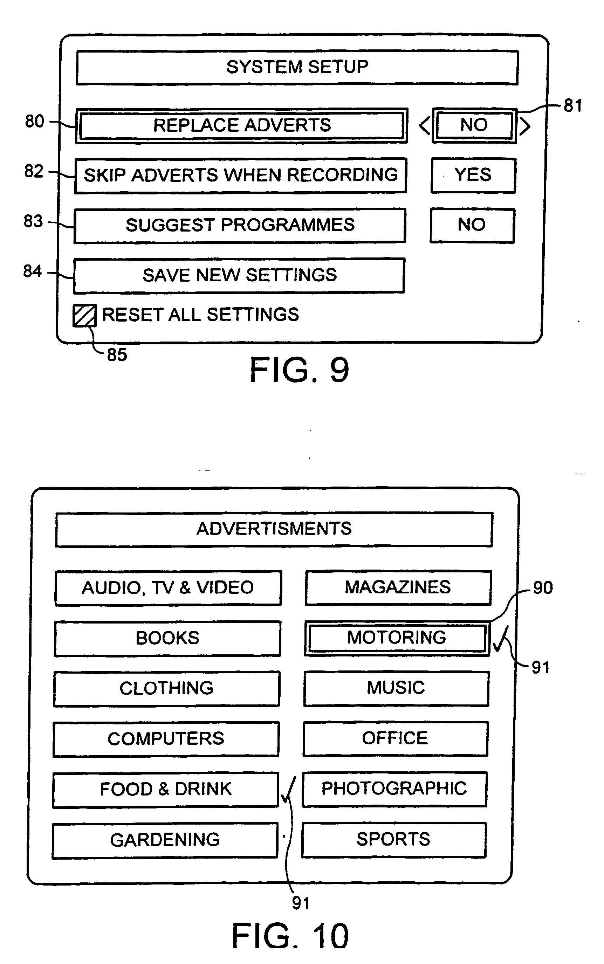

A planner screen is illustrated schematically in Figure 6. When the planner screen is selected to be displayed on the TV 2, for example by a selection of the menu item 65 in Figure 5, the processor 28 retrieves the data representing the planner information from the RAM 26 and causes the HDR 3 to display a planner screen as shown in of Figure 8.

Referring back to Figure 7, the movie "The Doors" is highlighted to indicate a user selection. Upon operation of the "execute" key 113 on the remote control 28. information associated with "The Doors" is stored in the RAM 26, namely the date on which the "The Doors" is scheduled to be broadcast, the channel on which it is broadcast "Channel 4", the start and end time of the broadcast, as well as the name of the programme ("The Doors"). Manipulation of the appropriate key on the remote control 28 causes the HDR 3 to display the planner screen of Figure 8. The names of the television programmes in the planner (reference numeral 71) are displayed together with the names of channels (reference numeral 72). In addition, status information (reference numeral 73) is displayed, indicative of whether a programme is stored on the hard disk 13 and has been viewed ("Trainspotting"), whether a programme has been partially viewed ("Get Carter"), whether a stored programme is yet to be viewed ("Friends"), or whether a programme is yet to be recorded on the hard disk 13 ("The Doors" and "Silverstone Grand Prix"). Signals representative of such status information are generated automatically by the processor 28, and the data representative thereof is stored in the memory RAM 26 on selection of a programme. The data in the RAM 26 is updated by the processor 28 once a status change has occurred, e.g. when a recorded and previously unviewed programme has been viewed.

The planner screen of Figure 8 can be used to control several of the functions of the HDR 3. For instance, a recorded programme can be replayed from the hard disk 13 by selecting the desired programme using the "up" and "down" keys 109, 110 and then by operating the "playback" key 99 on the remote control 28. In case of a partially-viewed programme (such as "Get Carter"), the viewer may resume viewing such programme by giving the same commands (selection followed by manipulation of the "playback" key 99). The processor 23 then operates the hard disk 13 to jump to the point where the viewing was interrupted and resumes the playback (by operation of the HDR 3 as described above in greater detail).

Also, any of the programmes listed in the planner screen as recorded on the hard disk 13 (such as "Friends") can be deleted from the hard disk 13 by selecting the same and then operating a "delete" key on the remote control 28. Such "delete" key in this embodiment is a colour key whose colour is indicated in box 74 in Figure 8. Also, a programme listed in the planner as to be recorded (such as "The Doors" or "Silverstone Grand Prix") can be deleted by selecting the programme followed by operating another colour key on the remote control 28 corresponding to the colour indicated by box 75.

The planner screen as shown in Figure 8 furthermore allows for the execution of a "link" command by selecting one of the listed programmes followed by manipulating the colour key on the remote control corresponding to the colour shown in box 76. The link command allows for programmes related to the one selected to be included into the planner programme list for recording.

A programme may be related in some way to other programmes to be transmitted at different times and/or on different channels by the same TV service company. Obviously, programmes in daily or weekly serials are related to each other. Other relationships are less obvious. For example, a TV service company may wish to run a season of James Bond movies over a number of different channels with each movie being shown one or more times. Broadcasting in the digital domain makes it possible to include in the data for the showings of each movie, together with further data linking that movie to other movies in the season. The processor 23 is arranged to respond to such linking data by displaying prompts when the viewer selects one movie by executing the link command. The prompts alert the viewer to other movies in the season and ask the viewer whether he/she wishes any of the other movies to be included in the planner for recording.

Alternatively, the HDR 3 may be arranged to make such selection automatically without prompting the user to confirm the selection. In this case, the automatically selected programmes may simply be included in the planner. Alternatively, they may be listed in a separate screen similar to the planner screen of Figure 8.

### 7. System Set-up

Figure 9 shows a system set-up screen as displayed when the system set-up item 64 of Figure 6 is selected. In this embodiment, three set-up parameters are listed. A first parameter 80 is shown as highlighted and allows for a selection of whether or not advertisements received from the broadcaster are substituted with pre-recorded advertisements, as described above. A selection is performed by highlighting the parameter 80 by using the "up" and "down" keys 109, 110, and by manipulating the "left" and "right" keys 111, 112 on the remote control 28 which causes a menu item 81 associated with the parameter 80 to switch between the settings "yes" and "no". Similarly, parameter 82 allows for a selection of whether or not advertisements not to be recorded during recording of a programme, as described above. A parameter 83 enables the user to activate or deactivate an automatic selection for recording of programmes linked to a programme previously selected by the user, as described above. The thus selected parameters are saved in the RAM 26 by selecting the parameter 84 and manipulating the "execute" key 113 on the remote control 28. The settings may be reset by manipulating the colour key on the remote control 28 which corresponds to the colour displayed in the box 85.

### 8. Advertisement Selection

When the "adverts" icon 66 of Figure 6 is selected, an advertisement selection screen is displayed as shown in Figure 10 of the accompanying drawings. The advertisement selection screen allows for selection of the category of advertisements which will be played back from the hard disk 13 if the "replace adverts" setting (parameter 80 in Figure 9) is activated (see above). The selection of the desired advertisement category is performed by manipulating the "up", "down", "right" and "left" keys 109-112 on the remote control 28 to highlight a desired category. In the advertisement selection screen in Figure 10, the category "Motoring" is highlighted (indicated by box 90). The highlighted category can then be activated, for example, by manipulating the "execute" key 113 on the remote control 28. An activated category is marked by a tick 91. More than one category can be activated at the same time. In the example of Figure 10. the categories "food & drink" and "motoring" are activated.

It should be noted that the present invention is not limited to the embodiment as described above. It is envisaged that various modifications and variations to the above described embodiment can be made without falling outside the scope of the present invention as determined from the claims.

## Claims

1. A receiver (3) for receiving television signals, representative of television programmes, in a plurality of channels, the receiver (3) including a recorder (13) for recording the television programmes;
the television signals also including programme schedule data which defines events in terms of channels, programmes and broadcast times, and the receiver (3) including:
a decoder (16) for separating the signals representative of the television programmes from the programme schedule data;
means (23) for producing output signals for displaying on a television screen events in the programme schedule in accordance with the programme scheduling data; and
a user operable selector (28) operable to select displayed events, the recorder (13) being responsive to such user selection to record television programmes corresponding to the selected events, wherein the output signals are for displaying recorded events and include playback information indicating whether a recorded event has been partly played back from the recorder (13).

2. The receiver of claim 1, wherein the output signals are for displaying events selected for recording, including information indicating whether or not an event is still to be recorded.

3. The receiver (3) of any preceding claim, arranged to receive the programme schedule data, defining the events in the programme schedule over a predetermined period of time, in a dedicated one of the plurality of channels.

4. The receiver (3) of claim 3, wherein the programme schedule data is carried in the dedicated channel at closely spaced intervals or substantially continuously.

5. The receiver (3) of any preceding claim, wherein the recorder (13) comprises a hard disk.

6. The receiver (3) of any one of claims 1 to 4, wherein the recorder (13) comprises an optical storage device.

7. The receiver (3) of any preceding claim, wherein events for display are updated at regular intervals in accordance with the received programme schedule data.

8. The receiver (3) of any preceding claim, wherein the display of events selected for recording is updated at regular intervals in accordance with the received programme schedule data.

9. The receiver (3) of any preceding claim, wherein the receiver (3) is arranged to automatically select for recording a second event in the programme schedule in response to a user selection for recording a first event, having a predetermined relationship with the second event, in the programme schedule.

10. The receiver (3) of claim 9, wherein the output signals are for displaying events selected for recording automatically.

11. The receiver (3) of any preceding claim, wherein the receiver (3) is arranged to receive programme schedule data in each of a number of the plurality of channels, at closely spaced intervals or substantially continuously, the receiver (3) further comprising:
a decoder circuit operable on the number of channels for separating the signals representative of television programmes from the programme schedule data, wherein the receiver (3) is arranged to cause the recorder (13) to record in the number of channels selected events in the programme schedule in accordance with the programme schedule data received in the number of channels, respectively.

## Patentansprüche

1. Empfänger (3) zum Empfangen von Fernsehsignalen, die Fernsehprogramme darstellen, auf mehreren Kanälen, wobei der Empfänger (3) eine Aufnahmevorrichtung (13) zum Aufzeichnen der Fernsehprogramme enthält;
wobei die Fernsehsignale des Weiteren Programmplandaten enthalten, die Ereignisse im Hinblick auf Kanäle, Programme und Sendezeiten definieren, und wobei der Empfänger (3) Folgendes enthält:
einen Decoder (16) zum Trennen der Signale, welche die Fernsehprogramme darstellen, von den Programmplandaten;
Mittel (23) zum Erzeugen von Ausgangssignalen, um auf einem Fernsehschirm Ereignisse in dem Programmplan entsprechend den Programmplandaten anzuzeigen; und
eine vom Benutzer bedienbare Wähleinrichtung (28), die dafür geeignet ist, angezeigte Ereignisse auszuwählen,
wobei die Aufnahmevorrichtung (13) auf eine solche vom Benutzer vorgenommene Auswahl reagiert, indem sie Fernsehprogramme entsprechend den ausgewählten Ereignissen aufzeichnet, wobei die Ausgangssignale dem Anzeigen von aufgezeichneten Ereignissen dienen und Wiedergabeinformationen enthalten, die anzeigen, ob ein aufgezeichnetes Ereignis teilweise von der Aufnahmevorrichtung (13) wiedergegeben wurde.

2. Empfänger nach Anspruch 1, wobei die Ausgangssignale dem Anzeigen von Ereignissen dienen, die zum Aufzeichnen ausgewählt wurden, einschließlich Informationen, die anzeigen, ob noch ein Ereignis aufgezeichnet werden muss oder nicht.

3. Empfänger (3) nach einem der vorangehenden Ansprüche, der dafür konfiguriert ist, die Programmplandaten, welche die Ereignisse in dem Programmplan über einen vorgegebenen Zeitraum hinweg definieren, auf einem bestimmten der mehreren Kanäle zu empfangen.

4. Empfänger (3) nach Anspruch 3, wobei die Programmplandaten auf dem bestimmten Kanal in eng voneinander beabstandeten Intervallen oder im Wesentlichen kontinuierlich transportiert werden.

5. Empfänger (3) nach einem der vorangehenden Ansprüche, wobei die Aufnahmevorrichtung (13) eine Festplatte umfasst.

6. Empfänger (3) nach einem der Ansprüche 1 bis 4, wobei die Aufnahmevorrichtung (13) eine optische Speichervorrichtung umfasst.

7. Empfänger (3) nach einem der vorangehenden Ansprüche, wobei Ereignisse, die angezeigt werden sollen, in regelmäßigen Intervallen entsprechend den empfangenen Programmplandaten aktualisiert werden.

8. Empfänger (3) nach einem der vorangehenden Ansprüche, wobei die Anzeige von Ereignissen, die zur Aufzeichnung ausgewählt wurden, in regelmäßigen Intervallen entsprechend den empfangenen Programmplandaten aktualisiert werden.

9. Empfänger (3) nach einem der vorangehenden Ansprüche, wobei der Empfänger (3) dafür konfiguriert ist, in Reaktion auf eine vom Benutzer getroffene Auswahl zum Aufzeichnen eines ersten Ereignisses, das in einer zuvor festgelegten Beziehung zu dem zweiten Ereignis steht, in dem Programmplan automatisch ein zweites Ereignis in dem Programmplan zur Aufzeichnung auszuwählen.

10. Empfänger (3) nach Anspruch 9, wobei die Ausgangssignale dem automatischen Anzeigen von Ereignissen, die zum Aufzeichnen ausgewählt wurden, dienen.

11. Empfänger (3) nach einem der vorangehenden Ansprüche, wobei der Empfänger (3) dafür konfiguriert ist, Programmplandaten auf jedem einer Anzahl der mehreren Kanäle in eng voneinander beabstandeten Intervallen oder im Wesentlichen kontinuierlich zu empfangen, wobei der Empfänger (3) des Weiteren:
eine Decoderschaltung umfasst, die in der Lage ist, auf der Anzahl von Kanälen die Signale, die Fernsehprogramme darstellen, von den Programmplandaten zu trennen, wobei der Empfänger (3) dafür konfiguriert ist, die Aufnahmevorrichtung (13) zu veranlassen, auf der Anzahl von Kanälen ausgewählte Ereignisse in dem Programmplan entsprechend den Programmplandaten, die jeweils auf der Anzahl von Kanälen empfangen wurden, aufzuzeichnen.

## Revendications

1. Récepteur (3) destiné à recevoir des signaux de télévision, représentatifs de programmes de télévision, dans une pluralité de canaux, le récepteur (3) comprenant un dispositif d'enregistrement (13) destiné à enregistrer les programmes de télévision :
les signaux de télévision comprenant également des données de grilles de programmes qui définissent des événements en termes de canaux, de programmes et de moments de diffusion, et le récepteur (3) comprenant :
un décodeur (16) destiné à sé parer les signaux représentatifs des programmes de télévision des données de grilles de programmes ;
un moyen (23) destiné à produire des signaux de sortie pour afficher sur l'écran de télévision des événements dans la grille de programme conformément aux données de grilles de programmes ; et
un dispositif de sélection (28) pouvant être activé par l'utilisateur pouvant être activé pour sélectionner des événements affichés, le dispositif d'enregistrement (13) répondant à une telle sélection par l'utilisateur pour enregistrer des programmes de télévision correspondant aux événements sélectionnés, dans lequel les signaux de sortie sont destinés à afficher des événements enregistrés et comprennent des informations de lecture indiquant si un événement enregistré a été partiellement lu par le dispositif d'enregistrement (13).

2. Récepteur selon la revendication 1, dans lequel les signaux de sortie sont destinés à afficher des événements sélectionnés pour l'enregistrement, comprenant des informations indiquant si un événement est toujours à enregistrer ou non.

3. Récepteur (3) selon l'une quelconque des revendications précédentes, agencé pour recevoir les données de grilles de programmes, définissant les événements dans la grille de programme sur une période prédéterminée, dans un canal dédié de la pluralité de canaux.

4. Récepteur (3) selon la revendication 3, dans lequel les données de grilles de programmes sont portées dans le canal dédié à intervalles étroitement espacés ou sensiblement en continu.

5. Récepteur (3) selon l'une quelconque des revendications précédentes, dans lequel le dispositif d'enregistrement (13) comprend un disque dur.

6. Récepteur (3) selon l'une quelconque des revendications 1 à 4, dans lequel le dispositif d'enregistrement (13) comprend un dispositif de stockage optique.

7. Récepteur (3) selon l'une quelconque des revendications précédentes, dans lequel des événements destinés à l'affichage sont mis à jour à intervalles réguliers conformément aux données de grilles de programmes reçues.

8. Récepteur (3) selon l'une quelconque des revendications précédentes, dans lequel l'affichage d'événements sélectionnés pour l'enregistrement est mis à jour à intervalles réguliers conformément aux données de grilles de programmes reçues.

9. Récepteur (3) selon l'une quelconque des revendications précédentes, dans lequel le récepteur (3) est agencé pour sélectionner automatiquement l'enregistrement d'un deuxième événement dans la grille de programmes en réponse à une sélection par l'utilisateur pour enregistrer un premier événement, ayant une relation prédéterminée avec le deuxième événement, dans la grille de programmes.

10. Récepteur (3) selon la revendication 9, dans lequel les signaux de sortie sont destinés à l'affichage d'événements sélectionné s pour un enregistrement automatique.

11. Récepteur (3) selon l'une quelconque des revendications précédentes, dans lequel le récepteur (3) est agencé pour recevoir des données de grilles de programmes dans chaque canal d'un certain nombre de canaux, à in tervalles étroitement espacés ou sensiblement en continu, le récepteur (3) comprenant en outre :
un circuit de décodage pouvant fonctionner sur la pluralité de canaux pour séparer les signaux représentatifs de programmes de télévision à partir des données de grilles de programmes, dans lequel le récepteur (3) est agencé pour amener le dispositif d'enregistrement (13) à enregistrer dans la pluralité de canaux des événements sélectionnés dans la grille de programmes conformément aux données de grilles de pro grammes reçues respectivement dans la pluralité de canaux.
